# EUROPEAN PATENT SPECIFICATION

(11) **EP 4 122 687 B1**
(45) Date of publication and mention of the grant of the patent: **09.09.2026**
(21) Application number: 21306014.8
(22) Date of filing: 19.07.2021
(51) Int. Cl.: B29D 11/00, B29C 33/42

(54) **COMPOSITE MOLD INSERT FOR FABRICATING MICROSTRUCTURED LENSES**
ZUSAMMENGESETZTER FORMEINSATZ ZUR HERSTELLUNG MIKROSTRUKTURIERTER LINSEN
INSERT DE MOULE COMPOSITE POUR LA FABRICATION DE LENTILLES MICROSTRUCTURÉES

(43) Date of publication of application: 25.01.2023
(60) Divisional application: 26174283.7 / 4 775 373
(73) Proprietor: ESSILOR INTERNATIONAL, 94220 Charenton-Le-Pont (FR)
(72) Inventor: IKIZER, Burcin, LOWELL (US); SHAN, Haifeng, SHREWBURY, 01545 (US); DRAMMEH, Ahmed, ARLINGTON, 02474 (US); TOKARSKI, Zbigniew, WOODSTOCK, 06281 (US)
(74) Representative: Plasseraud IP

(56) References cited:
- WO-A1-2019/124354
- JP-A- H1 148 258
- US-A1- 2013 120 707

## Description

### FIELD

The present disclosure relates to a composite mold insert for reducing defects during fabrication of lenses, including lenses having microstructures thereon.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Glass inserts can be used during injection molding to fabricate lenses that are free of defects, such as "weld line" and "center distortion" defects. Glass inserts are more adept at preventing such defects due to having lower thermal conductivity. This property helps preserve the heat of an injected polymer melt, which then helps "heal" weld line defects by retarding the cooling of the polymer melt and preventing distortion due to differential shrinkage.

However, fabrication of lenses having microstructures (e.g. for myopia control) may require the use of a mold insert having a microstructured surface that is less feasible to achieve on glass due to technological or economic reasons. That is, forming microstructures on a glass surface can be expensive, difficult to produce, can lead to glass breakage during microstructure engraving, and are easily and often broken during handling, cleaning, and the production of lenses. Therefore, a mold insert having low thermal conductivity while retaining the ability to accurately and repetitively reproduce target microstructures on lenses without mold defects is desired.

Aspects of the disclosure may address some of the above-described shortcomings in the art, particularly with the solutions set forth in the claims.

US 2013/120707 A1 discloses a mold insert for fabricating microstructured lenses and a method of forming a microstructured lens according to the preambles of claims 1 and 9.

### SUMMARY

The present invention relates to a mold insert for fabricating microstructured lenses according to independent claim 1 and to a method of forming a microstructured lens according to independent claim 9.

Note that this summary section does not specify every feature and/or incrementally novel aspect of the present disclosure or claimed invention. Instead, this summary only provides a preliminary discussion of different embodiments and corresponding points of novelty. For additional details and/or possible perspectives of the embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein:
FIG. 1A shows an exemplary cross-sectional schematic of an exemplary composite mold insert, within the scope of the present disclosure.
FIG. 1B shows an exemplary schematic of a straight injection molding process, within the scope of the present disclosure.
FIG. 2A shows a microscopy image of the plurality of raised microstructures on the brass master template, within the scope of the present disclosure.
FIG. 2B shows a microscopy image of the plurality of recessed microstructures on the nickel working stamp, within the scope of the present disclosure.
FIG. 3A shows an optical image of the nickel working stamp with the plurality of microstructures formed thereon, useful within the scope of the present disclosure.
FIG. 3B shows an optical image of the resulting lens with an inverted pattern of the plurality of microstructures formed thereon, useful within the scope of the present disclosure.
FIG. 4 is an exemplary flow chart for a method of forming a lens, within the scope of the present disclosure.

### DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

As described herein, glass mold inserts can be used to make thin finished single vision (FSV) lenses, but they can also be used to make the thicker semi-finished (SF) lenses. SF (one product) are typically surfaced after molding to patient prescription whereas FSV (multiple products) can be ready to market. Steel mold inserts can be used with the thicker SF lenses because glass is easily broken and the weld lines are far less prevalent during molding of thicker lenses. The mold insert described herein can be used with both glass and steel mold inserts.

Direct patterning of surfaces using lithographic methods such as electron beam lithography (EBL) or photolithography allows unique nanoscale structures to be defined in methodical, step-by-step layer build-up manner that delivers high quality results that cannot be obtained by any other means, but is generally unsuitable for mass production or requires substantial infrastructure and financial investment to make it. Diamond turning of microscale structures into nickel-phosphorous (NiP) coated stainless steel mold inserts can be expensive to produce, customized for a single base curve lens, replaced yearly or when damaged, and entail long lead times for fabrication, but can still be more feasible than lithography. A more economical route to creating large numbers of microstructure patterns on mold inserts can be found in replication-based technology where a single master may give birth to many clones of itself, eliminating the need to repeat an entire fabrication process from scratch. The choice of stamp material can depend on several factors including cost, available fabrication facilities, the choice of imprint material and substrate, size-scale of the structures, as well as other factors specific to the particular situation. Generally, the desired properties of the stamp material include sufficient hardness not to deform during the imprint and molding process and limited thermal mismatch to the imprint substrate and mold inserts. Nickel can be the material of choice due to existing standard replication techniques.

However, as previously mentioned, thin lenses made from said diamond turned NiP coated steel inserts can have the risk of cosmetics issues such as weld-fines, center distortion, and optical deformations because the NiP plated steel insert has inherent thermal properties that can cause the injected polymer melt to quench quickly once the polymer melt makes contact with the NiP stainless steel insert. These inherent thermal properties can include heat capacity, thermal conductivity, and density that are all related to heat flow, which are less favorable for metals as compared to glass or polymers.

Described herein is a pathway for making injection moldable stamps that are cost efficient, reusable, can be rapidly produced in bulk (with short lead times), and can be used with multiple lens base curves, such as +/- 1 base curve, or +/- 2 base curves, or greater than +/- 0.5 base curves. A glass mold insert can be used in conjunction with a diamond turned, embossed, injection molded, or imprinted working stamps including a target microstructure pattern formed thereon. Additionally, the working stamp can be used in conjunction with a metal mold insert.

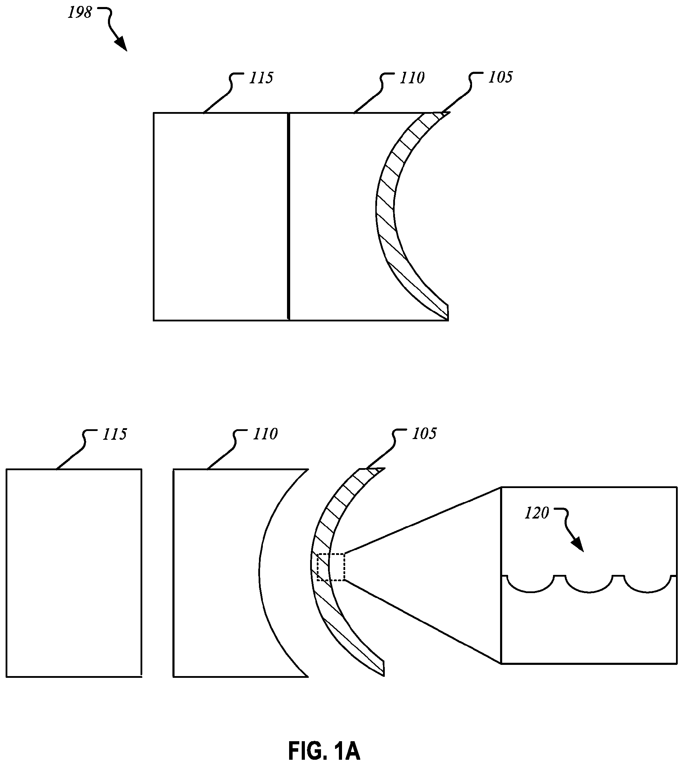

To this end, FIG. 1A shows an exemplary cross-sectional schematic of an exemplary composite mold insert, useful within the scope of the present disclosure. In a useful scope, a first mold insert 198 includes a working stamp 105, a body 110, and a base 115. The working stamp 105 can include a first surface having a plurality of microstructures 120 formed thereon. The plurality of microstructures 120 can be raised or recessed. The working stamp 105 can be flat or have a base curvature based on a desired resulting lens curvature or optical power. The base curvature of the working stamp 105 can additionally be concave or convex. The body 110 can include a first surface configured to contact a second surface of the working stamp 105, wherein the second surface of the working stamp 105 is on a side opposite the first surface of the working stamp 105. As such, the first surface of the body 110 can be formed based on the base curvature of the working stamp 105. Optionally, the working stamp 105 can be fastened to the body 110, for example via an adhesive or fastener, or some form of surface modification on the exposed face of the body 110, or the contact side of the working stamp 105 to the body 110 . The base 115 can include a first surface configured to contact a second surface of the body 110, wherein the second surface of the body 110 is on a side opposite the first surface of the body 110. Thus, the body 110 can be disposed between the working stamp 105 and the base 115. The base 115 can have a minimum thickness of, for example, 20 mm. The body 110 can have a minimum thickness of, for example, 4 mm.

In a useful scope, a material of the base 115 can be a metal, a material of the body 110 can be glass, a ceramic, or a polymer, or any other material with a low thermal conductivity (e.g. less than 5 W·m⁻¹·K⁻¹ at 25°C, or less than 2 W·m⁻¹·K⁻¹ at 25°C, or between 0.05 and 5 W·m^{- 1}·K^{- 1} at 25°C), and a material of the working stamp 105 can be a metal or a polymer. Notably, the metal or polymer of the working stamp 105 can be sufficiently resilient for withstanding multiple injection molding cycles while providing an inexpensive pathway to produce additional working stamps 105. In an example, the base 115 can be stainless steel and the body 110 can be glass. In an example, the working stamp 105 can be made from thin nickel shims, polyimide sheets, nylon resin, curable acrylates and the like, or metal-oxide particle (for example, ZrO₂ nanoparticle dispersion)-doped polymers that are durable, flexible, and can be curved to cover a particular base curve range. These stamping materials are inexpensive as compared to a dedicated NiP coated steel insert and can be made by replicating a master template multiple times, making each working stamp 105 investment much more inexpensive. In an example, the working stamp 105 can be nickel and formed via an electrodeposition process. The working stamp 105 can have a low surface roughness. Polymeric working stamps 105 can be fabricated with microstructures imprinted (e.g., hard acrylate working stamp 105 material) on a metal, ceramic, glass, polyimide, etc. structural support. The microstructured working stamp 105 can be fastened to the flat, convex, or concave adjacent insert piece (e.g. a stainless steel body 110 or a glass body 110) to produce the patterned resulting lens while being easily swapped out with another of the working stamp 105 upon breakage or reaching the lifespan of the working stamp 105.

The plurality of microstructures 120 can be used to mold, for example, refractive micro-structures or diffractive micro/nano-structures. The plurality of microstructures 120 can be an inversion of a desired final pattern be formed on the resulting lens after molding. The plurality of microstructures 120 can include microlenses or microlenslets or any other type of structure or elements having physical Z deformation/height or depth between 0.1 µm to 50 µm and width/length between 0.5 µm to 1.5 mm. These structures preferably have periodical or pseudo periodical layout, but may also have randomized positions. The preferred layout for microstructures is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light with angle ranging from +/- 1° to +/-30°. A distance between structures may range from 0 (contiguous) to 3 times the structure in "X" and/or "Y" size (separate microstructures).

In the sense of the disclosure, two optical elements located on a surface of a lens substrate are contiguous if there is a path supported by said surface that links the two optical elements and if along said path one does not reach the basis surface on which the optical elements are located. According to another scope, the optical elements are contiguous over a pupil when the optical lens over said pupil comprises no refraction area having a refractive power based on a prescription for said eye of the wearer or a refraction area having a refractive power based on a prescription for said eye of the wearer consisting in a plurality of respectively independent island-shaped areas. According to another scope, the two optical elements are contiguous if there is a path linking the two optical elements along part of said path one may not measure the refractive power based on a prescription for the eye of the person. According to another scope, optical elements being contiguous can also be defined in a surfacic or surfaceoriented manner. A measured surface being between 3 mm² and 10 mm² is considered. The measured surface comprises a density of "W" optical elements per mm². If in said measured surface, at least 95% of the surface, preferably 98%, has an optical power different from the surface onto which the optical elements are located, said optical elements are considered to be contiguous.

Furthermore, microstructures which form a microstructured main surface of an ophthalmic lens substrate may include lenslets. Lenslets may form bumps and/or cavities (i.e., raised or recessed lenslet structures) at the main surface they are arranged onto. The outline of the lenslets may be round or polygonal, for example hexagonal. More particularly, lenslets may be microlenses. A microlens may be spherical, toric, cylindrical, prismatic, or aspherical shapes or any combination to make a multi-element shape. A microlens may have a single focus point, or cylindrical power, or multi-focal powers, or non-focusing point. Microlenses can be used to prevent progression of myopia or hyperopia. In that case, the base lens substrate comprises a base lens providing an optical power for correcting myopia or hyperopia, and the microlenses may provide respectively an optical power greater than the optical power of the base lens if the wearer has myopia, or an optical power lower than the optical power of the base lens if the wearer has hyperopia. Lenslets may also be Fresnel structures, diffractive structures such as microlenses defining each a Fresnel structure, permanent technical bumps (raised structures), or phase-shifting elements. It can also be a refractive optical element such as microprisms and a light-diffusing optical element such as small protuberances or cavities, or any type of element generating roughness on the substrate. It can also be π-Fresnel lenslets as described in US2021109379, i.e. Fresnel lenslets which phase function has π phase jumps at the nominal wavelength, as opposition to unifocal Fresnel lenses which phase jumps are multiple values of 2π. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity. In a useful scope, the microstructure can be a branding mark, holographic mark, metasurface, or the like.

Lenslets may have a contour shape being inscribable in a circle having a diameter greater than or equal to 0.5 micrometers (µm) and smaller than or equal to 1.5 millimeters (mm). Lenslets may have a height, measured in a direction perpendicular to the main surface they are arranged onto, that is greater than or equal to 0.1 µm and less than or equal to 50 µm. Lenslets may have periodical or pseudo periodical layout but may also have randomized positions. One layout for lenslets is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20, 500, or 1000 Diopters, and light deviation is configured such that the structure may locally scatter light with angle ranging from +/- 1° to +/- 30°. A distance between structures may range from 0 (contiguous) to 3 times the structure (separate microstructures).

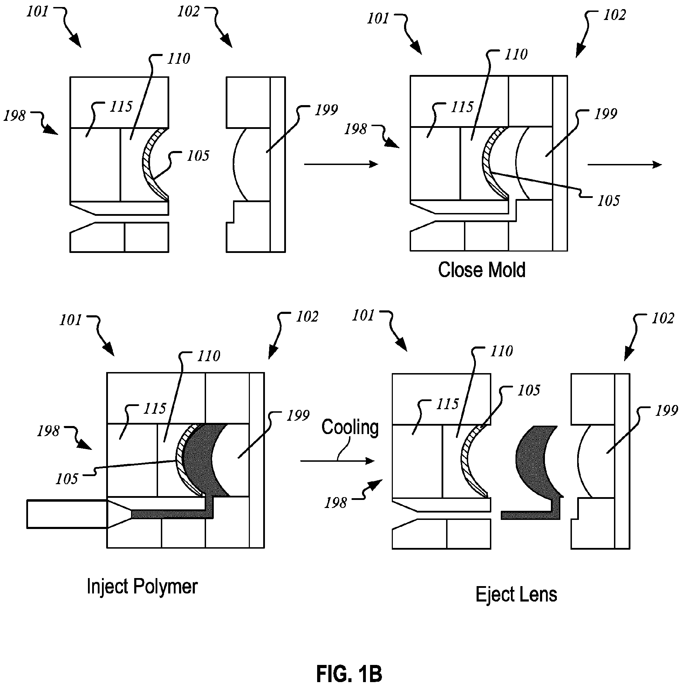

FIG. 1B shows an exemplary schematic of a straight injection molding process, useful within the scope of the present disclosure. In a useful scope, the mold device can include a first mold side 101 and a second mold side 102, the first mold insert 198 disposed on the first mold side 110, and a second mold insert 199 disposed on the second mold side 102. The first mold side 101 and the second mold side 102 can each include a hollow portion, wherein the first mold insert 198 and the second mold insert 199 can be removeably disposed therein. The first mold insert 198 can include the base 115, the body 110, and the working stamp 105 as previously described, wherein the working stamp 105 is disposed, on the first mold side 101, closer to the second mold side 102 as compared to the base 115, which is disposed farther from the second mold side 102. The second mold insert 199 can have a smooth surface or similarly include another of the working stamp 105 having the plurality of microstructure 120. The arrangement of the second mold insert 199 can be based on desired optical properties of the resulting lens. The first mold side 101 with the first mold insert 198 and the second mold side 102 with the second mold insert 199 can be configured to move towards one another to form a cavity or away from one another to open the mold device. While FIG. 1B shows the first mold insert 198 as concave and the second mold insert 199 as convex, it may be appreciated that the first mold insert 198 can be convex or flat and the second mold insert 199 can be concave or flat.

The cavity can be connected to a hollow line formed by the coupling of the first and second mold sides 101, 102. The line can be configured to receive a polymer melt, for example, via a screw feeder or similar polymer injector device. The polymer injector can be attached to the mold device and configured to inject the polymer melt into the cavity when the first mold side 101 is coupled with the second mold side 102 to form a resulting lens from the polymer melt with surface features based on the plurality of microstructures 120 and a surface of the second mold insert 199 facing the cavity. For a semi-finished lens, a curvature along a convex side of the lens is fixed and the concave side of the lens can be modified after molding, for example via grinding and polishing. Note that multiple lines for receiving the polymer melt can be connected, such that an injection of the polymer from a source can fill multiple mold devices with a single injection and allow for parallel fabrication of multiple lenses.

Notably, for a non-straight injection molding process, the first mold insert 198 and the second mold insert 199 can further adjust their displacement even after coupling and after the polymer melt is injected. For example, the first mold insert 198 and the second mold insert 199 can move closer together after the polymer melt is injected to compress the polymer melt before the polymer melt fully cools. The resulting lens can be removed upon uncoupling of the first mold side 101 and the second mold side 102.

In one advantage, the body 110 being formed of glass can provide a low thermal conductivity backing behind the working stamp 105 that can be formed of a higher thermal conductivity material. In an example pertaining to non-uniformity of wall thickness in the lens, such as in a finished single vision, when the working stamp 105 is sufficiently thin, such as less than or equal to 1 mm, or less than 500 micron, or less than 250 micron, or less than 125 micron, or less than 100 micron, the working stamp 105 may not act as much of a heat sink during either the polymer melt injection or a cooling phase of the molding process. In such a manner, the glass body 110 can have a low thermal conductivity to prevent quenching of the injected polymer melt, which might otherwise introduce molding defects. That is, coupling the working stamp 105 with the body 110 can effectively form a glass mold insert that prevents excess heat loss with the feature replication accuracy and durability of a metal stamp without the potential quenching issues of an all-metal mold insert. Moreover, as compared to an all-glass mold insert, the working stamp 105 can be easier to pattern with the plurality of microstructures 120 while being less brittle and more durable than glass.

### EXAMPLES

Example 1 - a flexible nickel working stamp 105 was made from a brass (or aluminum, or nickel phosphorous plated steel) master template which was diamond turned with the desired plurality of microstructures 120. Typical material properties relevant to thermal heat flow are described in Table 1.

**Table 1 - Material properties related to thermal heat flow**

| Material | Heat Capacity J/g-°C | Thermal Conductivity W/m-K | Density kg/m^3 |
|---|---|---|---|
| Glass | 0.8 | 0.8 | 2,500-2,800 |
| Stainless steel | 0.5 | 15 | 7,480-8,040 |
| Brass | 0.4 | 109 | 8,400-8,700 |
| Copper | 0.4 | 385 | 8,940 |
| Aluminum | 0.9 | 167 | 2,710 |
| Polyimide | 0.9-1.1 | 0.8 | 1.5 |
| Polycarbonate | 1.7 | 0.03-1.7 | 1,200 |
| Epoxy | 1 | 0.2 | 1.1-1.4 |
| Nickel | 0.5 | 61 | 8,908 |

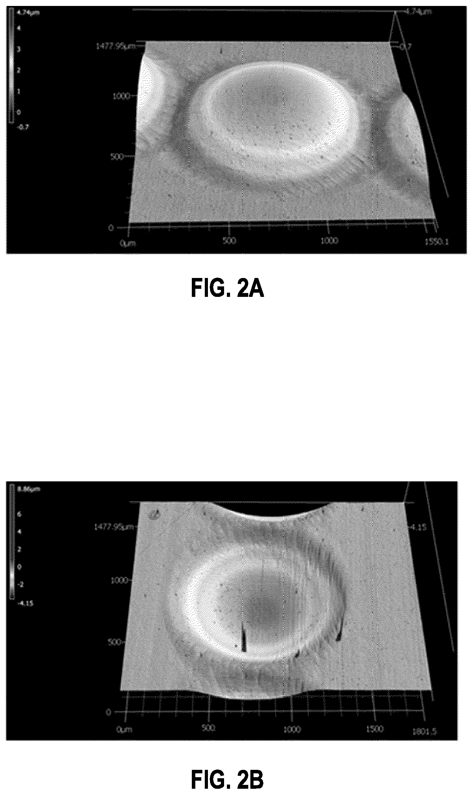

FIG. 2A shows a 3D microscopy image of the plurality of microstructures 120 on the brass master template, useful within the scope of the present disclosure.
FIG. 2B shows a 3D microscopy image of the plurality of microstructures 120 on the nickel working stamp 105, useful within the scope of the present disclosure. Analysis of the results indicates that the replication quality from the master to the working stamp 105 replica is excellent. Notably, the height of the measured feature on the master is within a 1% difference of the height on the working stamp 105, and the diameter of the measured feature on the master is within a 0.5% difference of the diameter on the working stamp 105.

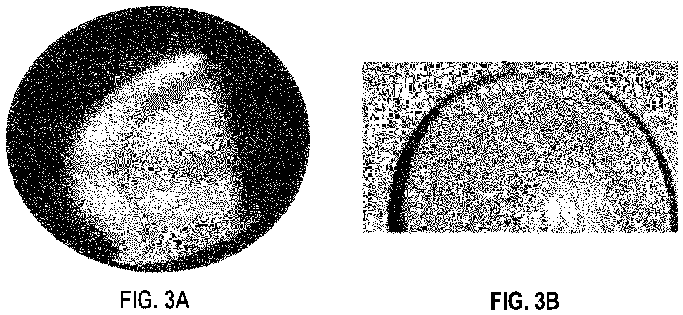

FIG. 3A shows an optical image of the nickel working stamp 105 with the plurality of microstructures 120 formed thereon, useful within the scope of the present disclosure. FIG. 3B shows an optical image of the resulting lens with an inverted pattern of the plurality of microstructures 120 formed thereon, useful within the scope of the present disclosure. Advantageously, results showed that one nickel working stamp 105 base curve can be used to mold a range of lens base curves and can be used on concave or convex mold inserts to produce microstructures on convex lens surfaces or concave side of wafer lid for encapsulation.

As previously described, in a useful scope, the working stamp 105 can be fastened to the body 110, for example via an adhesive, wherein the material of the body 110 is a metal. In this example, the nickel working stamp 105 was also adhered onto the first surface of the stainless steel body 110 using a high temperature resistant and low coefficient of thermal expansion (CTE) double-coated adhesive capable of withstanding temperature exposure in the range of 100°C to 150°C. That is, a glass transition temperature of the adhesive is greater than 150°C. For example, the CTE is less than 5E-6 K⁻¹. For example, a ratio of thermal expansion between the material of the working stamp 105 and the material of the body 110 or between the material of the body 110 and the material of the base 115 is less than 2. In another example, the working stamp 105 can be fastened to the body 110 via a mechanical surface modification process such as plasma treatment and electrostatically bonded onto one another. Analysis results showed excellent microstructure pattern replication in the resulting lens.

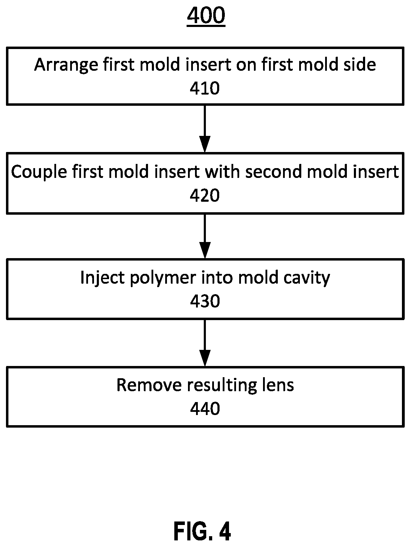

FIG. 4 is an exemplary flow chart for a method 400 of forming a lens, useful within the scope of the present disclosure. In step 410, the first mold insert 198 is arranged on the first mold side 101 and the second mold insert 199 is arranged on the second mold side 102. In step 420, the first mold insert 198 is coupled with the second mold insert 199 to form the cavity. In step 430, the polymer is injected into the cavity via the polymer injection device, screw feeder, or the like. In step 440, the resulting lens can be removed after the first mold insert 198 is uncoupled from the second mold insert 199.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. Rather, any limitations to embodiments are presented in the following claims.

## Claims

1. A mold insert (198) for fabricating microstructured lenses, comprising:
a body (110) having a first side and a second side, a material of the body (110) having a thermal conductivity between 0.05 and 5 W/m-K; and
a working stamp (105) disposed adjacent to the body (110) along the second side of the body (110), the working stamp (105) including a plurality of microstructures (120),
**Characterized in that** the mold insert further comprises a base (115) disposed adjacent to the body (110) along the first side of the body (110), a material of the base (115) being a metal;
wherein a thickness of the body (110) is between 4 mm and 20 mm, and
wherein a minimum thickness of the base (115) is 20 mm.

2. The mold insert (198) of claim 1, wherein the working stamp (105) is disposed adjacent to the body (110) along the second side of the body (110) opposite the first side of the body (110), the working stamp (105) including the plurality of microstructures (120) on a side of the working stamp (105), an additional side of the working stamp (105) being proximal to the second side of the body (110).

3. The mold insert (198) of claim 1, wherein a material of the body (110) is glass, ceramic, or a polymer.

4. The mold insert (198) of claim 1, wherein the thermal conductivity of material of the body (110) is between 0.5 and 2.0 W/m-K.

5. The mold insert (198) of claim 1, wherein a material of the working stamp (105) is nickel.

6. The mold insert (198) of claim 1, wherein a thickness of the working stamp (105) is less than or equal to 1 mm.

7. The mold insert (198) of claim 1, wherein the working stamp (105) is attached to the body (110) via an adhesive with a coefficient of thermal expansion (CTE) less than 5E-6 K⁻¹.

8. The mold insert (198) of claim 7, wherein a glass transition temperature of the adhesive is greater than 150°C.

9. A method of forming a microstructured lens, comprising:
arranging a first mold insert (198) on a first mold side (101), the first mold insert (198) including
a body (110) having a first side and a second side, a material of the body (110) having a thermal conductivity between 0.05 and 5 W/m-K, and
a working stamp (105) disposed adjacent to the body (110) along the second side of the body (110), the working stamp (105) including a plurality of microstructures (120);
coupling the first mold insert (198) with a second mold insert (199) on a second mold side (102) to form a cavity; and
injecting a polymer melt into the cavity;
**characterized in that** the mold insert further comprises a base (115) disposed adjacent to the body (110) along the first side of the body (110), a material of the base (115) being a metal,
wherein a thickness of the body (110) is between 4 mm and 20 mm, and
wherein a minimum thickness of the base (115) is 20 mm.

10. The method of claim 9, wherein
the working stamp (105) is disposed adjacent to the body (110) along the second side of the body (110) opposite the first side of the body (110), the working stamp (105) including the plurality of microstructures (120) on a side of the working stamp (105), an additional side of the working stamp (105) being proximal to the second side of the body (110), and
arranging the first mold insert (198) on the first mold side (101) further comprises arranging the base (115) farthest from the cavity, arranging the body (110) adjacent to the base (115), and arranging the working stamp (105) adjacent to the base (115) and proximal to the cavity before coupling the first mold insert (198) with the second mold insert (199).

11. The method of claim 10, wherein arranging the first mold insert (198) on the first mold side (101) further comprises attaching the working stamp (105) to the body (110) via an adhesive with a coefficient of thermal expansion (CTE) less than 5E-6 K⁻¹.

12. The method of claim 9, wherein a material of the body (110) is glass.

13. The method of claim 9, wherein the thermal conductivity of the material of the body (110) is between 0.5 and 2.0 W/m-K.

## Patentansprüche

1. Formeinsatz (198) zum Fertigen von mikrostrukturierten Linsen, der Folgendes umfasst:
einen Körper (110) mit einer ersten Seite und einer zweiten Seite, wobei ein Material des Körpers (110) eine Wärmeleitfähigkeit zwischen 0,05 und 5 W/m-K aufweist; und
einen Arbeitsstempel (105), der benachbart zu dem Körper (110) entlang der zweiten Seite des Körpers (110) angeordnet ist, wobei der Arbeitsstempel (105) mehrere Mikrostrukturen (120) aufweist,
**dadurch gekennzeichnet, dass** der Formeinsatz ferner eine Basis (115) umfasst, die benachbart zu dem Körper (110) entlang der ersten Seite des Körpers (110) angeordnet ist, wobei ein Material der Basis (115) ein Metall ist;
wobei eine Dicke des Körpers (110) zwischen 4 mm und 20 mm beträgt, und
wobei eine Mindestdicke der Basis (115) 20 mm beträgt.

2. Formeinsatz (198) nach Anspruch 1, wobei der Arbeitsstempel (105) benachbart zu dem Körper (110) entlang der zweiten Seite des Körpers (110) gegenüber der ersten Seite des Körpers (110) angeordnet ist, wobei der Arbeitsstempel (105) die mehreren Mikrostrukturen (120) auf einer Seite des Arbeitsstempels (105) aufweist, wobei eine zusätzliche Seite des Arbeitsstempels (105) proximal zu der zweiten Seite des Körpers (110) ist.

3. Formeinsatz (198) nach Anspruch 1, wobei ein Material des Körpers (110) Glas, Keramik oder ein Polymer ist.

4. Formeinsatz (198) nach Anspruch 1, wobei die Wärmeleitfähigkeit des Materials des Körpers (110) zwischen 0,5 und 2,0 W/m-K liegt.

5. Formeinsatz (198) nach Anspruch 1, wobei ein Material des Arbeitsstempels (105) Nickel ist.

6. Formeinsatz (198) nach Anspruch 1, wobei eine Dicke des Arbeitsstempels (105) kleiner oder gleich 1 mm ist.

7. Formeinsatz (198) nach Anspruch 1, wobei der Arbeitsstempel (105) mittels eines Klebstoffs mit einem Wärmeausdehnungskoeffizienten (CTE) von weniger als 5E-6 K⁻¹ an dem Körper (110) befestigt ist.

8. Formeinsatz (198) nach Anspruch 7, wobei eine Glasübergangstemperatur des Klebstoffs größer als 150 °C ist.

9. Verfahren zum Bilden einer mikrostrukturierten Linse, das Folgendes umfasst:
Anordnen eines ersten Formeinsatzes (198) auf einer ersten Formseite (101), wobei der erste Formeinsatz (198) Folgendes umfasst:
einen Körper (110) mit einer ersten Seite und einer zweiten Seite, wobei ein Material des Körpers (110) eine Wärmeleitfähigkeit zwischen 0,05 und 5 W/m-K aufweist, und
einen Arbeitsstempel (105), der benachbart zu dem Körper (110) entlang der zweiten Seite des Körpers (110) angeordnet ist, wobei der Arbeitsstempel (105) mehrere Mikrostrukturen (120) aufweist,
Koppeln des ersten Formeinsatzes (198) mit einem zweiten Formeinsatz (199) auf einer zweiten Formseite (102), um einen Hohlraum zu bilden; und
Injizieren einer Polymerschmelze in den Hohlraum;
**dadurch gekennzeichnet, dass** der Formeinsatz ferner eine Basis (115) umfasst, die benachbart zu dem Körper (110) entlang der ersten Seite des Körpers (110) angeordnet ist, wobei ein Material der Basis (115) ein Metall ist,
wobei eine Dicke des Körpers (110) zwischen 4 mm und 20 mm beträgt, und
wobei eine Mindestdicke der Basis (115) 20 mm beträgt.

10. Verfahren nach Anspruch 9, wobei
der Arbeitsstempel (105) benachbart zu dem Körper (110) entlang der zweiten Seite des Körpers (110) gegenüber der ersten Seite des Körpers (110) angeordnet ist, wobei der Arbeitsstempel (105) die mehreren Mikrostrukturen (120) auf einer Seite des Arbeitsstempels (105) aufweist, wobei eine zusätzliche Seite des Arbeitsstempels (105) proximal zu der zweiten Seite des Körpers (110) ist, und
das Anordnen des ersten Formeinsatzes (198) auf der ersten Formseite (101) ferner ein Anordnen der Basis (115) am weitesten von dem Hohlraum entfernt, ein Anordnen des Körpers (110) benachbart zu der Basis (115) und ein Anordnen des Arbeitsstempels (105) benachbart zu der Basis (115) und proximal zu dem Hohlraum, bevor der erste Formeinsatz (198) mit dem zweiten Formeinsatz (199) gekoppelt wird, umfasst.

11. Verfahren nach Anspruch 10, wobei das Anordnen des ersten Formeinsatzes (198) auf der ersten Formseite (101) ferner ein Befestigen des Arbeitsstempels (105) an dem Körper (110) mittels eines Klebstoffs mit einem Wärmeausdehnungskoeffizienten (CTE)von weniger als 5E-6 K⁻¹ umfasst.

12. Verfahren nach Anspruch 9, wobei ein Material des Körpers (110) Glas ist.

13. Verfahren nach Anspruch 9, wobei die Wärmeleitfähigkeit des Materials des Körpers (110) zwischen 0,5 und 2,0 W/m-K liegt.

## Revendications

1. Insert de moule (198) pour la fabrication de lentilles microstructurées, comprenant :
un corps (110) comportant un premier côté et un second côté, un matériau du corps (110) présentant une conductivité thermique comprise entre 0,05 et 5 W/m-K ; et
un poinçon de travail (105) disposé adjacent au corps (110) le long du second côté du corps (110), le poinçon de travail (105) comprenant une pluralité de microstructures (120),
**caractérisé en ce que** l'insert de moule comprend en outre une base (115) disposée adjacente au corps (110) le long du premier côté du corps (110), un matériau de la base (115) étant un métal ;
une épaisseur du corps (110) étant comprise entre 4 mm et 20 mm, et
une épaisseur minimale de la base (115) étant 20 mm.

2. Insert de moule (198) selon la revendication 1, le poinçon de travail (105) étant disposé adjacent au corps (110) le long du second côté du corps (110) opposé au premier côté du corps (110), le poinçon de travail (105) comprenant la pluralité de microstructures (120) sur un côté du poinçon de travail (105), un côté supplémentaire du poinçon de travail (105) étant proximal au second côté du corps (110).

3. Insert de moule (198) selon la revendication 1, un matériau du corps (110) étant du verre, de la céramique ou un polymère.

4. Insert de moule (198) selon la revendication 1, la conductivité thermique du matériau du corps (110) étant comprise entre 0,5 et 2,0 W/m-K.

5. Insert de moule (198) selon la revendication 1, un matériau du poinçon de travail (105) étant du nickel.

6. Insert de moule (198) selon la revendication 1, une épaisseur du poinçon de travail (105) étant inférieure ou égale à 1 mm.

7. Insert de moule (198) selon la revendication 1, le poinçon de travail (105) étant fixé au corps (110) par l'intermédiaire d'un adhésif doté d'un coefficient de dilatation thermique (CTE) inférieur à 5E-6 K⁻¹.

8. Insert de moule (198) selon la revendication 7, une température de transition vitreuse de l'adhésif étant supérieure à 150°°C.

9. Procédé de formation d'une lentille microstructurée, comprenant les étapes consistant à :
placer un premier insert de moule (198) sur un premier côté de moule (101), le premier insert de moule (198) comprenant
un corps (110) comportant un premier côté et un second côté, un matériau du corps (110) présentant une conductivité thermique comprise entre 0,05 et 5 W/m-K, et
un poinçon de travail (105) disposé adjacent au corps (110) le long du second côté du corps (110), le poinçon de travail (105) comprenant une pluralité de microstructures (120) ;
accoupler le premier insert de moule (198) avec un second insert de moule (199) sur un second côté de moule (102) pour former une cavité ; et
injecter un polymère fondu dans la cavité,
**caractérisé en ce que** l'insert de moule comprend en outre une base (115) disposée adjacente au corps (110) le long du premier côté du corps (110), un matériau de la base (115) étant un métal,
une épaisseur du corps (110) étant comprise entre 4 mm et 20 mm, et
une épaisseur minimale de la base (115) étant 20 mm.

10. Procédé selon la revendication 9,
le poinçon de travail (105) étant disposé adjacent au corps (110) le long du second côté du corps (110) opposé au premier côté du corps (110), le poinçon de travail (105) comprenant la pluralité de microstructures (120) sur un côté du poinçon de travail (105), un côté supplémentaire du poinçon de travail (105) étant proximal au second côté du corps (110), et
le placement du premier insert de moule (198) sur le premier côté de moule (101) comprend en outre l'étape consistant à placer la base (115) le plus loin de la cavité, à placer le corps (110) adjacent à la base (115), et à placer le poinçon de travail (105) adjacent à la base (115) et proximal à la cavité avant d'accoupler le premier insert de moule (198) au second insert de moule (199).

11. Procédé selon la revendication 10, le placement du premier insert de moule (198) sur le premier côté de moule (101) comprenant en outre l'étape consistant à fixer le poinçon de travail (105) au corps (110) par l'intermédiaire d'un adhésif doté d'un coefficient de dilatation thermique (CTE) inférieur à 5E-6 K⁻¹.

12. Procédé selon la revendication 9, un matériau du corps (110) étant du verre.

13. Procédé selon la revendication 9, la conductivité thermique du matériau du corps (110) étant comprise entre 0,5 et 2,0 W/m-K.
